# FASCICULE DE BREVET EUROPEEN

(11) **EP 3 784 950 B1**
(45) Date de publication et mention de la délivrance du brevet: **29.05.2024**
(21) Numéro de dépôt: 19726508.5
(22) Date de dépôt: 25.04.2019
(51) Int. Cl.: F16M 11/42, B60G 7/00, B60B 33/04, B62B 3/14

(54) **DISPOSITIF DE SUPPORT POUR ÉCRAN TACTILE**
HALTEVORRICHTUNG FÜR EINEN BERÜHRUNGSBILDSCHIRM
SUPPORTING DEVICE FOR A TOUCH SCREEN

(30) Priorité: 25.04.2018 FR 1800441
(43) Date de publication de la demande: 03.03.2021
(73) Titulaire: KNDS France, 78034 Versailles Cedex (FR)
(72) Inventeur: DIAS, Françoise, 18023 Bourges (FR); VON EUW, Mathias, 18023 Bourges (FR); CIRIA, Samuel, 18023 Bourges (FR)
(74) Mandataire: Cabinet Chaillot
(86) Numéro de dépôt international: PCT/IB2019/053420
(87) Numéro de publication internationale: WO 2019/207523

(56) Documents cités:
- WO-A1-2018/010578
- NL-C- 1 038 533
- NL-C2- 1 038 533
- US-A1- 2012 217 690
- US-A1- 2015 257 291

## Description

Le domaine technique de l'invention est celui des dispositifs de support pour un écran tactile.

Il est connu de la demande de brevet FR1701120 un dispositif de support pour un écran tactile comportant un pied vertical solidarisable avec un écran tactile de grande dimension, par exemple de diagonale 49 pouces (écran de 1073 mm x 64 mm) ou 55 pouces (1209 mm x 680 mm) . Ce dispositif support permet de mettre en oeuvre l'écran tactile sur un terrain d'opérations extérieures, par exemple pour le commandement d'opérations militaires, de sécurité civile ou de maintien de l'ordre.

Cet écran fournit aux opérationnels une vision cartographique du théâtre d'opérations et leur permet, à l'aide d'outils logiciels appropriés, de définir, préparer et simuler et suivre les missions en cours.

Le dispositif selon l'art antérieur est difficilement déplaçable sur des sols présentant des variations de niveau. Ainsi, il est difficile de franchir une faible marche ou bien de le descendre sur une rampe inclinée depuis un véhicule par exemple en raison de la garde au sol fixe de ce dispositif.

C'est le but de l'invention que de proposer un dispositif support permettant de pallier de tels inconvénients de franchissement. Avantageusement, le dispositif apporte aussi une stabilité accrue à l'écran durant son utilisation.

Ainsi le dispositif support selon l'invention dispose d'une garde au sol facilement variable permettant un transport et un déploiement aisé sur un terrain d'opérations extérieures tout en facilitant la mise en oeuvre de l'écran.

La demande de brevet américain US 2015/257291 divulgue un dispositif de support pour écran selon le préambule de la revendication 1.

Ainsi l'invention a pour objet un dispositif de support pour un écran tactile, l'écran étant solidarisable avec le dispositif au niveau d'un pied vertical relié à une base, la base comportant au moins deux bras oscillants disposés de part et d'autre du pied, bras comportant chacun au niveau d'une première extrémité une liaison pivot horizontale solidaire de la base et au moins une paire de roues au niveau de leur seconde extrémité, dispositif caractérisé en ce qu'il comporte au moins un moyen élastique relié à chaque bras et disposé de manière à fournir un effort tendant à compenser le poids du dispositif équipé de l'écran, dispositif comportant un moyen de blocage du débattement angulaire des bras relativement à la base.

Avantageusement, le moyen élastique comporte au moins un premier et un second ressort solidaires chacun de la base par une première extrémité et solidaire chacun d'un bras différent par une seconde extrémité.

Avantageusement, le moyen élastique comporte au moins un ressort à gaz

Avantageusement, le moyen de blocage provoque une mise à l'échappement du ressort à gaz lorsqu'il est débloqué.

Avantageusement, le débattement angulaire des bras permet de poser la base au sol.

Avantageusement,au moins une paire de roues comporte un moyen d'orientation des roues.

Avantageusement, le moyen d'orientation comporte une chape solidaire de chaque roue, chapes reliées entre elles par une barre pour assurer le parallélisme des roues entre elles.

L'invention sera mieux comprise à la lecture de la description suivante, description faite en référence aux dessins annexés et dans lesquels :
[Fig. 1] représente en perspective un dispositif selon l'invention équipé d'un écran.
[Fig. 2] est une vue en perspective de la base seule du dispositif selon l'invention.
[Fig. 3] représente une vue latérale du dispositif équipé d'un écran en position haute.
[Fig. 4] est une vue de détail des roues directionnelles.
[Fig. 5] représente une vue latérale du dispositif équipé d'un écran en position basse.

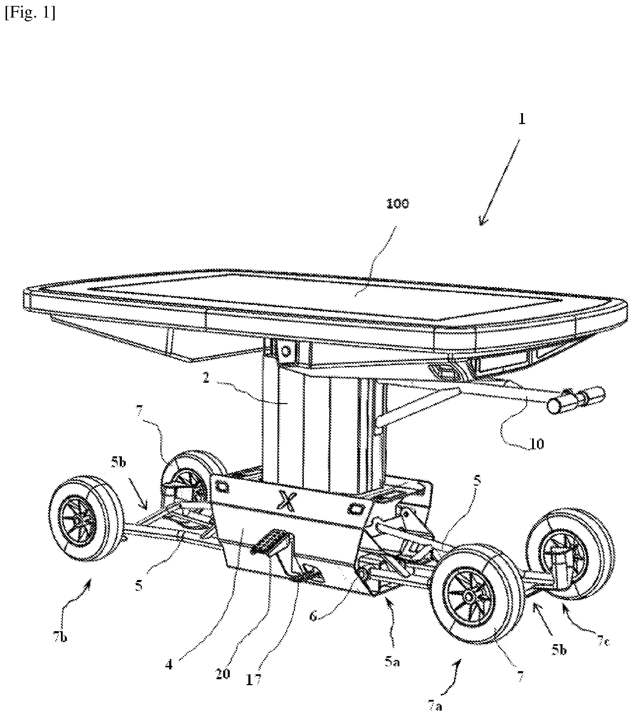

Selon la figure 1, un dispositif de support 1 est solidaire dans sa partie supérieure d'un écran tactile 100 de grande taille. L'écran 100 est solidaire de l'extrémité supérieure d'un pied vertical 2. L'écran est ici dans une position horizontale permettant un usage de l'écran en table d'affichage.

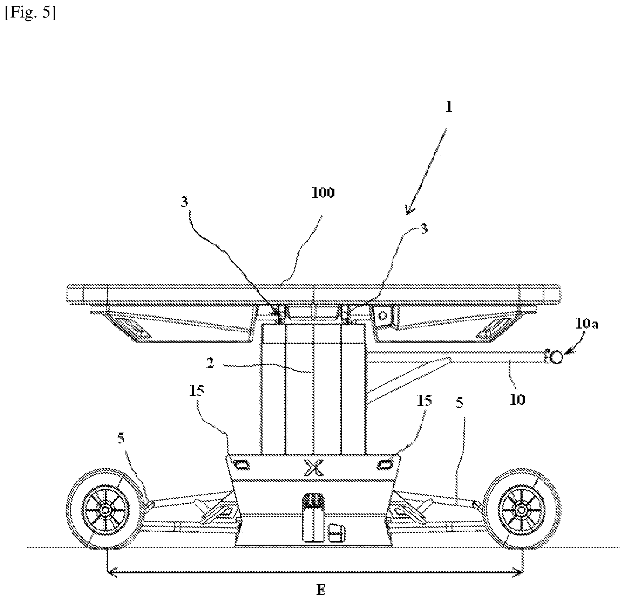

L'écran 100 peut être passé en position verticale grâce à une charnière 3 située entre l'écran 100 et le pied 2 et mieux vue à la figure 5. La charnière 3 comparable à celle décrite dans le brevet FR1701120 comporte également un moyen de verrouillage en position pour immobiliser l'inclinaison de l'écran 100 dans une position désirée par un opérateur (opérateur, charnière et moyen de verrouillage non visibles).

L'extrémité inférieure du pied 2 est solidaire d'une base 4 qui comporte deux bras oscillants 5 disposés de part et d'autre du pied 2. Les bras 5 comportent un treillis métallique rigidifiant les bras 5. Une première extrémité 5a de chaque bras 5 comporte une liaison pivot 6 horizontale solidarisant le bras 5 avec la base 4 et permettant un mouvement de pivot dans un plan vertical du bras 5 par rapport à la base 4. La seconde extrémité 5b de chaque bras 5 comporte une paire (7a ou 7b) de roues 7 toutes orientées dans un même sens parallèle aux bras 5 pour permettre le déplacement du dispositif 1 selon ce même sens.

L'Homme du Métier choisira des roues 7 présentant chacune un diamètre et une empreinte au sol compatible de la nature du sol sur lequel le dispositif est amené à évoluer.

Selon un mode particulier de réalisation, au moins une des paires 7a de roues 7 dites roues directionnelles est associée à un dispositif d'orientation 7c de ladite paire 7a de roues directionnelles 7.

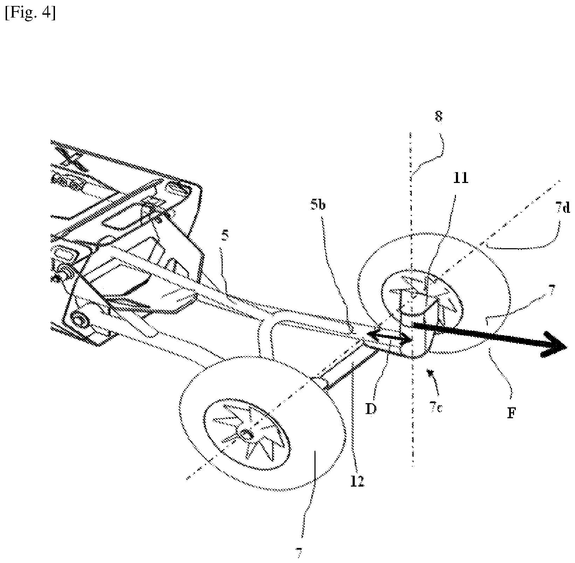

Un tel dispositif d'orientation 7c est visible à la figure 4. Ce dispositif est connu de l'Homme du Métier sous le nom de « roue folle ». Il comporte pour chaque roue 7 un axe de pivotement 8 sensiblement vertical et situé au bout de la seconde extrémité 5b du bras 5. La roue 7 a son propre axe de rotation 7d sensiblement horizontal et situé à distance D de l'axe de pivotement 8. Ce déport entre les axes 8 et 7d est obtenu par une chape 11.

Ainsi, lorsque qu'un effort F est appliqué perpendiculairement à l'axe de pivotement 8, la roue 7 tend à venir se placer en arrière du point d'application de la force F et parallèlement à cette force F.

Un timon 10 et sa poignée de traction 10a permettent ainsi de tirer ou de pousser le dispositif 1 et d'orienter celui-ci librement par le truchement du dispositif d'orientation 7c précité.

Les chapes 11 solidaires de chacune des roues 7 sont reliées entre elles par une barre 12 qui est articulée à chacune de ses extrémités solidaires des chapes 11 afin d'assurer le parallélisme des roues 7 entre elles. Les extrémités de la barre 12 sont situées au voisinage des axes de rotation 7d des roues 7.

L'autre paire 7b de roues 7 n'est pas orientable.

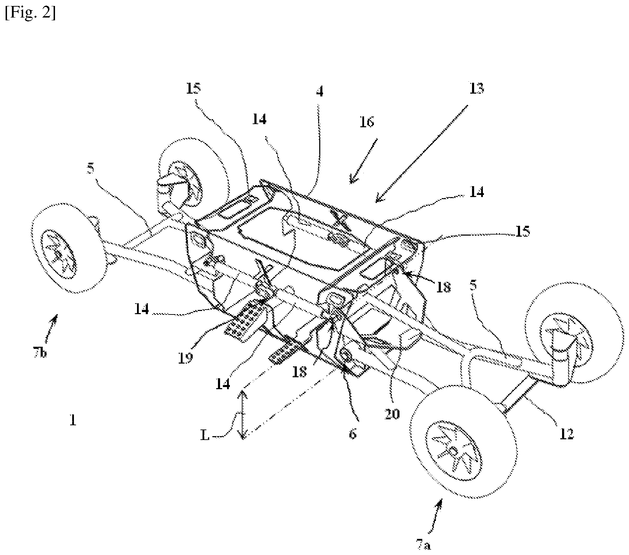

Comme on le voit à la figure 2, chaque bras 5 est articulé par rapport à la base 4 au niveau de la liaison pivot 6 qui est voisine d'une face inférieure de la base 4 qui est en regard du sol.

Chaque bras 5 est également relié à la base 4 par une paire de ressorts à gaz 14 qui sont reliés au bras considéré par une première articulation 18 et à la base 4 par un seconde articulation 19.

Comme on le voit sur la figure 2, la seconde articulation 19 est voisine d'un plan vertical médian de la base 4 et la première articulation 18 est portée par un étrier en tôle 20 solidaire du bras 5.

Le pivotement du bras 5 par rapport à la base 4 sur ses articulations 6 est donc limité par l'effort exercé par les ressorts 14 qui compensent le poids du dispositif 1

L'ensemble des ressorts à gaz 14 constitue un moyen de rappel élastique 13 qui est disposé de manière à fournir un effort tendant à compenser le poids du dispositif 1 équipé de l'écran 100 tel que visible à la figure 1.

La fixation des premières articulations 18 des extrémités des ressorts 14 avec les bras 5 est localisée à une distance L de la liaison pivot 6 des bras avec le bâti 4 de manière à ce que les ressorts 14 puissent exercer un couple C entre le bâti 4 et les bras 5.

En l'espèce, cette liaison est réalisée au dessus des liaisons pivots 6. Le poids du dispositif exerce alors un effort entrainant un couple tendant à rapprocher les premières articulations 18 des deux bras les unes des autres. Les ressorts à gaz 14 sont donc tarés de manière à fournir un effort tendant à compenser cet effet du poids du dispositif 1 équipé de l'écran 100 et à maintenir ainsi la face inférieure de la base 4 à distance du sol.

Le dispositif comporte un moyen de blocage 16 apte à bloquer le moyen élastique 13 en position. Ainsi, le moyen de blocage 16 pourra être libéré pour régler l'effort généré par les ressorts 14. Un utilisateur (utilisateur non représenté) débloquera les ressorts 14, qui sont bloqués en position par défaut, en appuyant sur des boutons 15 permettant une mise à l'échappement de tous les ressorts 14 par exemple.

Ensuite l'utilisateur procédera à la mise à hauteur souhaitée de la base 4 relativement au sol en relevant ou en abaissant la base 4 selon son désir puis il relâchera son appui sur les boutons 15 afin de bloquer à nouveau en position les différents ressorts 14.

Ce type de moyen de blocage de ressorts à gaz est bien connu, en particulier dans le domaine du mobilier de bureau pour le réglage en hauteur des fauteuils.

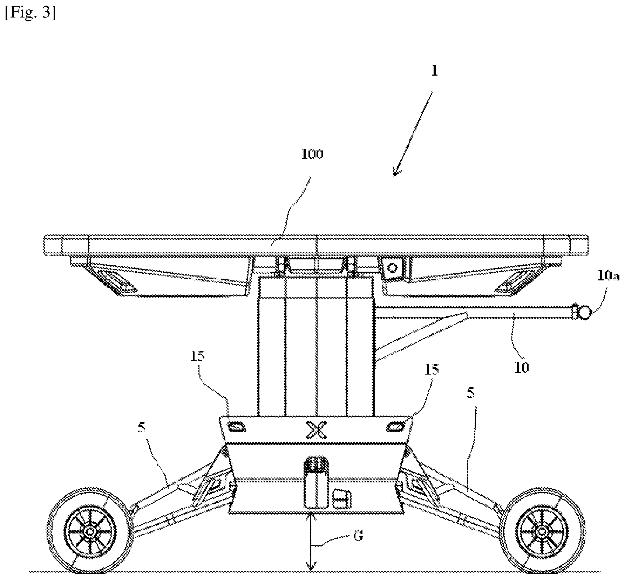

Ainsi, tel qu'à la figure 3, une garde au sol G importante de plusieurs centimètres, pourra être obtenue en soulevant la base 4 simultanément à l'appui sur les boutons 15 pour débloquer les ressorts 14 et ainsi faire varier le débattement angulaire des bras 5 relativement à la base 4 vers le bas. Une fois bloqué dans cette position haute, le dispositif 1 est hautement mobile et capable de franchir différents obstacles.

A l'inverse, tel qu'illustré à la figure 5, en appuyant sur la base 4 simultanément à l'appui sur les boutons 15 pour débloquer les ressorts 14, l'utilisateur fera ainsi varier le débattement angulaire des bras 5 relativement à la base 4 vers le haut. En abaissant au maximum la base 4, celle-ci peut reposer au sol bloquant ainsi les déplacements du dispositif 1 tout en lui assurant une grande stabilité grâce à l'empattement E entre chaque paire de roues 7 qui est alors à son maximum.

La variation de la hauteur de l'écran 100 relativement au sol est obtenue en appuyant sur des pédales 17 et 20 visibles à la figure 1 qui sont reliées à un vérin, par exemple un cric hydraulique ou encore un vérin électrique. Une pédale 20 permettra de commander la montée de l'écran 100, l'autre pédale 17 permettra de commander la descente de l'écran. Un tel dispositif de commande est décrit dans la demande de brevet FR1701120 et il n'est donc pas nécessaire de le préciser plus en détails.

## Revendications

1. Dispositif (1) de support pour un écran tactile (100), l'écran (100) étant solidarisable avec le dispositif (1) au niveau d'un pied vertical (2) relié à une base (4), la base (4) comportant au moins deux bras oscillants (5) disposés de part et d'autre du pied (2), bras (5) comportant chacun au niveau d'une première extrémité (5a) une liaison pivot horizontale (6) solidaire de la base (4) et au moins une paire de roues (7) au niveau de leur seconde extrémité (5b), dispositif (1) **caractérisé en ce qu'**il comporte au moins un moyen élastique (13) relié à chaque bras (5) et disposé de manière à fournir un effort tendant à compenser le poids du dispositif (1) équipé de l'écran (100), dispositif (1) comportant un moyen de blocage (16) du débattement angulaire des bras (5) relativement à la base (4).

2. Dispositif (1) selon la revendication 1, **caractérisé en ce que** le moyen élastique (13) comporte au moins un premier et un second ressort (14) solidaires chacun de la base (4) par une première extrémité (18) et solidaire chacun d'un bras (5) différent par une seconde extrémité (19).

3. Dispositif (1) selon la revendication 2, **caractérisé en ce que** le moyen élastique (13) comporte au moins un ressort à gaz (14).

4. Dispositif (1) selon la revendication 3, **caractérisé en ce que** le moyen de blocage (16) provoque une mise à l'échappement du ressort à gaz (14) lorsqu'il est débloqué.

5. Dispositif (1) selon l'une des revendications 1 à 4, **caractérisé en ce que** le débattement angulaire des bras (5) permet de poser la base (4) au sol.

6. Dispositif (1) selon l'une des revendications 1 à 5, **caractérisé en ce qu'**au moins une paire de roues (7) comporte un moyen d'orientation (7c) des roues (7).

7. Dispositif (1) selon la revendications 6, **caractérisé en ce que** le moyen d'orientation (7c) comporte une chape (11) solidaire de chaque roue (7), chapes (11) reliées entre elles par une barre (12) pour assurer le parallélisme des roues (7) entre elles.

## Patentansprüche

1. - Haltevorrichtung (1) für einen Berührungsbildschirm (100), wobei der Bildschirm (100) im Bereich eines vertikalen Fußes (2), der mit einer Basis (4) verbunden ist, fest mit der Vorrichtung (1) verbindbar ist, die Basis (4) umfassend mindestens zwei Schwenkarme (5), die auf beiden Seiten des Fußes (2) angeordnet sind, die Arme (5) jeweils umfassend in dem Bereich eines ersten Endes (5a) eine horizontale Schwenkverbindung (6), die fest mit der Basis (4) verbunden ist, und mindestens ein Paar Räder (7) in dem Bereich ihres zweiten Endes (5b), wobei die Vorrichtung (1), **dadurch gekennzeichnet ist, dass** sie mindestens eine elastische Einrichtung (13) umfasst, die mit jedem Arm (5) verbunden und angeordnet ist, um eine Kraft bereitzustellen, die dazu neigt, das Gewicht der mit dem Bildschirm (100) ausgestatteten Vorrichtung (1) zu kompensieren, die Vorrichtung (1) umfassend eine Blockiereinrichtung (16) der Winkelauslenkung der Arme (5) in Bezug auf die Basis (4).

2. - Vorrichtung (1) nach Anspruch 1, **dadurch gekennzeichnet, dass** die elastische Einrichtung (13) mindestens eine erste und eine zweite Feder (14) umfasst, die jeweils über ein erstes Ende (18) fest mit der Basis (4) verbunden sind und jeweils über ein zweites Ende (19) fest mit einem anderen Arm (5) verbunden sind.

3. - Vorrichtung (1) nach Anspruch 2, **dadurch gekennzeichnet, dass** die elastische Einrichtung (13) mindestens eine Gasfeder (14) umfasst.

4. - Vorrichtung (1) nach Anspruch 3, **dadurch gekennzeichnet, dass** die Blockiereinrichtung (16) bewirkt, dass die Gasfeder (14) entlüftet wird, wenn sie freigegeben wird.

5. - Vorrichtung (1) nach einem der Ansprüche 1 bis 4, **dadurch gekennzeichnet, dass** die Winkelauslenkung der Arme (5) es ermöglicht, die Basis (4) auf den Boden zu stellen.

6. - Vorrichtung (1) nach einem der Ansprüche 1 bis 5, **dadurch gekennzeichnet, dass** mindestens ein Paar Räder (7) eine Ausrichtungseinrichtung (7c) der Räder (7) umfasst.

7. - Vorrichtung (1) nach Anspruch 6, **dadurch gekennzeichnet, dass** die Ausrichtungseinrichtung (7c) einen Gabelkopf (11) umfasst, der fest mit jedem Rad (7) verbunden ist, wobei die Gabelköpfe (11) durch eine Stange (12) miteinander verbunden sind, um die Parallelität der Räder (7) untereinander zu gewährleisten.

## Claims

1. - A supporting device (1) for a touch screen (100), the screen (100) being able to be secured to the device (1) at a vertical foot (2) connected to a base (4), the base (4) comprising at least two oscillating arms (5) arranged on either side of the foot (2), wherein the arms (5) each comprise, at a first end (5a), a horizontal pivot connection (6) secured to the base (4) and at least one pair of wheels (7) at their second end (5b), the device (1) being **characterised in that** it comprises at least one resilient means (13) connected to each arm (5) and arranged so as to provide a force tending to compensate for the weight of the device (1) equipped with the screen (100), the device (1) comprising a blocking means (16) for blocking the angular travel of the arms (5) with respect to the base (4).

2. - The device (1) according to claim 1, **characterised in that** the resilient means (13) comprises at least a first and a second spring (14) each secured to the base (4) by a first end (18) and each secured to a different arm (5) by a second end (19).

3. - The device (1) according to claim 2, **characterised in that** the resilient means (13) comprises at least one gas spring (14).

4. - The device (1) according to claim 3, **characterised in that** the blocking means (16) causes a venting of the gas spring (14) when it is unblocked.

5. - The device (1) according to one of claims 1 to 4, **characterised in that** the angular travel of the arms (5) makes it possible to set the base (4) on the ground.

6. - The device (1) according to one of claims 1 to 5, **characterised in that** at least one pair of wheels (7) comprises an orientation means (7c) for orienting the wheels (7).

7. - The device (1) according to claim 6, **characterised in that** the orientation means (7c) comprises a yoke (11) secured to each wheel (7), wherein the yokes (11) are connected to one another by a bar (12) to ensure that the wheels (7) are parallel to one another.
